# EUROPÄISCHE PATENTANMELDUNG

(11) **EP 2 292 460 A2**
(43) Veröffentlichungstag der Anmeldung: **09.03.2011**
(21) Anmeldenummer: 10174285.6
(22) Anmeldetag: 27.08.2010
(51) Int. Cl.: B60L 11/18

(54) **Steckelement, Ladekabel mit dem Steckelement, Ladestation zur Aufnahme des Steckelements und Verfahren zur Bereitstellung eines Stromanschlusses in der Ladestation**

(30) Priorität: 02.09.2009 DE 102009039651; 16.11.2009 DE 102009053008; 30.11.2009 DE 102009056069
(71) Anmelder: Elektro-Bauelemente GmbH, 44536 Lünen (DE)
(72) Erfinder: Kachouh, Cheorallah, 44227 Dortmund (DE); Costa, Filipe, 59348 Lüdinghausen (DE)
(74) Vertreter: Ostermann, Thomas

(57) **Zusammenfassung**

Die Erfindung betrifft ein Steckelement für ein Ladekabel, mittels dessen elektrische Energie von einer Ladestation zu einem elektrisch betreibbaren Fahrzeug übertragbar ist, wobei das Steckelement mechanisch und/oder elektrisch mit einem Gegensteckelement der Ladestation verbindbar ist, wobei das Steckelement zur mechanischen und/oder elektrischen Verbindung des Fahrzeugs mit der Ladestation in ein Gegensteckelement der Ladestation einsteckbar ist, wobei dem Steckelement ein Datenspeicherelement zur Speicherung von Identifikationsinformationen zugeordnet ist, wobei die Identifikationsinformationen aus dem Datenspeicherelement auslesbar und von dem Steckelement an die Ladestation übertragbar sind.

## Beschreibung

Die Erfindung betrifft ein Steckelement für ein Ladekabel, mittels dessen elektrische Energie von einer Ladestation zu einem elektrisch betreibbaren Fahrzeug übertragbar ist, wobei das Steckelement mechanisch und/oder elektrisch mit einem Gegensteckelement der Ladestation verbindbar ist.

Ferner betrifft die Erfindung eine Ladestation zur Bereitstellung von elektrischer Energie für elektrisch betreibbare Fahrzeuge mit einem Gehäuse enthaltend wenigstens ein Gegensteckelement zur mechanischen und/oder elektrischen Verbindung mit einem Steckelement eines das Fahrzeug mit der Ladestation verbindenden Ladekabels.

Ferner betrifft die Erfindung ein Verfahren zur Bereitstellung eines Stromanschlusses in einer Ladestation für elektrisch betreibbare Fahrzeuge, wobei die Ladestation ein Gegensteckelement zur Aufnahme eines Steckelements eines die Ladestation mit dem Fahrzeug verbindenden Ladekabels aufweist, wobei zur Bereitstellung des Gegensteckelements der Ladestation in einer Bereitstellungsposition ein Verschlusselement, welches bei Nichtverwendung des Gegensteckelements den Zugang zu demselben versperrt, in eine Öffnungsstellung verbracht wird zur Freigabe des Gegensteckelements, und wobei das Steckelement in der Bereitstellungsposition mit dem Gegensteckelement mechanisch und/oder elektrisch verbunden wird.

Elektrisch betreibbare Fahrzeuge werden zur Aufladung ihres Energiespeichers üblicherweise über ein Ladekabel an eine elektrische Energie bereitstellende Ladestation angeschlossen. Derartige Ladestationen stehen vermehrt auf öffentlich zugänglichen Parkplätzen, in Einkaufszentren oder am Arbeitsplatz zur Verfügung. Um die in den Energiespeicher des Fahrzeugs eingespeiste Energiemenge bestimmbar zu machen und insbesondere gegenüber einem Fahrzeugnutzer abrechnen zu können, muss der Nutzer zunächst identifiziert werden. Heute geschieht dies beispielsweise indirekt mittels einer in die Ladestation integrierten Kartenleseeinheit. Der Nutzer führt eine EC-Karte, eine Kreditkarte oder eine Kundenkarte eines Ladestationenbetreibers in die Kartenleseeinheit ein und wird hierüber identifiziert. Zudem kann der Ladevorgang über die Karte abgerechnet bzw. einem bei dem Ladestationenbetreiber geführten Kundenkontos belastet werden. Nachteilig hierbei ist, dass mit der Installation der Kartenleseeinheit an der Ladestation hohe Kosten verbunden sind. Ferner besteht wie bei Geldautomaten die Möglichkeit der Manipulation und die Gefahr einer missbräuchlichen Nutzung. Die Kartenleseeinheit muss zudem zuverlässig vor Vandalismus sowie Witterungseinflüssen geschützt werden. Darüber hinaus ist die vergleichsweise zeitaufwändige Identifikation für den Nutzer insbesondere bei schlechtem Wetter, zum Beispiel Regen oder Schneefall, unvorteilhaft.

Aufgabe der Erfindung ist es daher, ein Steckelement für ein Ladekabel, ein Ladekabel, eine Ladestation sowie ein Verfahren zur schnellen, sicheren und kostengünstigen Identifikation des Nutzers anzugeben.

Zur Lösung dieser Aufgabe ist ein Steckelement in Verbindung mit dem Oberbegriff des Patentanspruchs 1 dadurch gekennzeichnet, dass dem Steckelement ein Datenspeicherelement zur Speicherung von Identifikationsinformationen zugeordnet ist, wobei die Identifikationsinformationen aus dem Datenspeicherelement auslesbar und von dem Steckelement an die Ladestation übertragbar sind.

Der besondere Vorteil der Erfindung besteht darin, dass eine Benutzeridentifikation anhand von Identifikationsinformationen erfolgen kann, die von dem Datenspeicherelement an die Ladestation übertragen werden, ohne dass der Nutzer selbst besondere Maßnahmen hierzu ergreifen muss. Ebenso kann eine Fahrzeugidentifikation anhand der gespeicherten Identifikationsinformationen erfolgen. Ferner können Betriebsparameter des Fahrzeugs, beispielsweise Angaben zu dem maximal zulässigen Ladestrom, an die Ladestation übertragen werden. Die Identifikationsinformationen können berührungslos bzw. unter Ausbildung einer Berührung (Kontakt) von dem Datenspeicherelement an die Ladestation übertragen werden. Das Datenspeicherelement kann beispielsweise mit einer in dem Steckelement integrierten Sendeeinheit zum Aussenden der Identifikationsinformationen zusammenwirken. Die Sendeeinheit kann von einem in dem Steckelement angeordneten Energiespeicher, beispielsweise einer Batterie, mit Energie versorgt werden. Ebenso ist möglich, die Energie über das bereits an dem Fahrzeug angeschlossene Ladekabel aus dem Energiespeicher des Fahrzeugs zu gewinnen. Die Identifikationsinformation kann automatisch an die Ladestation übertragen werden. Ferner kann der Datenaustausch nach dem Ausbilden eines Kontakts zwischen dem Steckelement und einem Teil der Ladestation, beispielsweise nach dem Einsetzen des Steckelements in das Gegensteckelement, leitungsgebunden erfolgen. Ebenso ist es denkbar, die Identifikationsinformation teilautomatisiert, beispielsweise nach Betätigung eines der entsprechenden Sendeeinheit zugeordneten Eingabemitteln durch den Nutzer, an die Ladestation zu senden.

Kerngedanke der Erfindung ist es hierbei, die Identität des Nutzers bzw. des Fahrzeugs in besonders einfacher Weise zu ermitteln. Die Identifikationsinformationen werden hierzu - beispielsweise vom Nutzer unbemerkt - während des Anschließens des Fahrzeugs an die Ladestation ausgetauscht. Der Nutzer wird hierdurch von der Eingabe einer Benutzerkennung entlastet. Zudem kann auf das Vorsehen von Eingabemitteln an der Ladestation verzichtet werden, so dass ein erhöhter Bedienkomfort und ein verbesserter Schutz vor Vandalismus, Fehlbedienung und Missbrauch realisiert sind.

Beispielsweise kann das Datenspeicherelement an das Steckelement angesteckt werden. Alternativ kann das Datenspeicherelement bereits bei der Herstellung des Steckelements in dasselbe eingebracht werden. Beispielsweise kann das Steckelement mittels Kunststoffspritzgießens hergestellt werden, wobei das Datenspeicherelement während des Fertigungsprozesses umspritzt wird und nach der Fertigung des Steckelements von außen unzugänglich in demselben angeordnet ist. Das Datenspeicherelement kann beispielsweise von einer Schutzhülle umgeben sein, die als thermischer und/oder mechanischer Schutz das Datenspeicherelement vor einer Beschädigung schützt. Mit dem Datenspeicherelement können weitere Komponenten, beispielsweise die Sendeeinheit und/oder der Energiespeicher, ganz oder teilweise von dem Steckelement umgeben sein.

Nach einer bevorzugten Ausführungsform der Erfindung ist das Datenspeicherelement austauschbar in einer Ausnehmung des Steckelements angeordnet, so dass das Datenspeicherelement aus dem Steckelement entnommen bzw. in dasselbe eingesetzt werden kann. Durch das Einsetzen unterschiedliche Datenspeicherelemente in das Steckelement ist es möglich, ein Ladekabel für unterschiedliche Nutzer oder unterschiedliche Fahrzeuge zu verwenden. Durch einen Austausch des Datenspeicherelements kann vorteilhaft eine Identifikation unterschiedlicher Kundenkonten in sehr einfacher Weise realisiert werden. Beispielsweise können ein erstes Datenspeicherelement der Privatperson des Nutzers und ein zweites Datenspeicherelement der Firma des Nutzers zugeordnet sein. Die Abrechnung des Ladevorgangs erfolgt dann über dasjenige Kundenkonto, dessen Datenspeicherelement während des Ladevorgangs in dem Steckelement angeordnet ist. Das Datenspeicherelement kann beispielsweise rastend - ähnlich wie eine Memory-Card in eine Digitalkamera - in der Ausnehmung des Steckelements gehalten werden.

Nach einer Weiterbildung der Erfindung ist das Datenspeicherelement als ein Chip ausgebildet, insbesondere als ein RFID-Chip zum passiven Auslesen einer Identifikationsinformation mittels eines von der Ladestation ausgesandten Trägersignals. Vorteilhaft kann auf Seiten des Steckelements auf eine Sendeeinheit und auf Mittel zur Energieversorgung verzichtet werden. Der Aufbau des Steckelements wird besonders einfach und günstig. Zugleich ist die Übertragung der Information mittels RFID-Chip aufgrund der langjährigen Erfahrung auch unter rauen Umgebungsbedingungen zuverlässig. Der RFID-Chip ist Teil eines RFID-Transponders, der über eine Antenne verfügt zum Empfang von Trägersignalen von einer der Ladestation zugeordneten Sendeeinheit. Da der RFID-Cip lediglich auf geringe Entfernungen ausgelesen werden kann, ist einer unbeabsichtigten Übertragung von Informationen an die Ladestation durch von im Kofferraum vorbeifahrender Fahrzeuge transportierten Ladekabeln zuverlässig vorgebeugt. Darüber hinaus kann die Übertragung der Informationen berührungslos erfolgen, so dass die Handhabung des Steckelements besonders einfach und intuitiv erfolgt.

Nach einer Weiterbildung der Erfindung ist dem Datenspeicherelement eine Festlegeeinheit zugeordnet. Die Festlegeeinheit ist in das Steckelement einsetzbar und aus diesem entnehmbar. Die Festlegeeinheit kann beispielsweise als eine mit dem Steckelement fest bzw. entnehmbar verbundene Schublade zum Einsetzen eines chipförmigen Datenspeicherelements oder als eine einfach aus der Ausnehmung des Steckelements entnehmbare Kassette ausgebildet sein. Ebenso kann die Festlegeeinheit als ein Trägerkörper für das Datenspeicherelement gebildet sein. Das Datenspeicherelement kann beispielsweise herausnehmbar in der Festlegeeinheit angeordnet sein. Vorteilhaft wird das mithin empfindliche Datenspeicherelement hierdurch vor Berührung und mechanischer Beschädigung besonders geschützt. Darüber hinaus ist die Aufbewahrung des Datenspeicherelements in der Festlegeeinheit auch außerhalb des Steckelements möglich, beispielsweise durch Anstecken bzw. Anklipsen der Festlegeeinheit an das Steckelement.

Nach einer Weiterbildung der Erfindung sind das Datenspeicherelement und/oder das Steckelement und/oder die Festlegeeinheit derart geformt bzw. angeordnet, dass das Datenspeicherelement witterungsgeschützt in dem Steckelement und/oder in der Festlegeeinheit angeordnet ist. Vorteilhaft kann das Steckelement aufgrund der witterungsgeschützten Anordnung des Datenspeicherelements auch unter ungünstigen Witterungsverhältnissen, beispielsweise bei Regen, Schnee, Minusgrade oder Sturm, in die Ladestation eingesetzt werden, ohne dass das Datenspeicherelement Schaden nimmt. Das Steckelement und/oder die Festlegeeinheit können beispielsweise spritzwassergeschützt bzw. hermetisch dicht ausgebildet sein. Ebenso kann das Datenspeicherelement in dem Steckelement derart verdeckt angeordnet sein, dass das Datenspeicherelement keiner direkten Sonneneinstrahlung ausgesetzt ist.

Nach einer Weiterbildung der Erfindung ist das Datenspeicherelement und/oder das Steckelement und/oder die Festlegeeinheit derart geformt bzw. angeordnet, dass das Datenspeicherelement in einer Steckposition des Steckelements, in der das Steckelement des Ladekabels in das Gegensteckelement der Ladestation eingesetzt ist, nicht aus dem Steckelement entnehmbar bzw. unzugänglich in demselben angeordnet ist. Vorteilhafterweise wird zur Vermeidung einer Entwendung des Ladekabels das Steckelement nach dem Einsetzen desselben in das Gegensteckelement der Ladestation in der Ladestation verriegelt. Die Ladestation weist hierzu einen Verriegelungsmechanismus auf, der ein versehentliches Herausfallen des Steckelements bzw. eine missbräuchliche Entnahme desselben insbesondere durch Unberechtigte zuverlässig vermeidet. Indem das Datenspeicherelement in der Steckposition des Steckelements unzugänglich in demselben angeordnet ist, ist vorteilhaft zugleich auch einer Entwendung des Datenspeicherelements vorgebeugt.

Zur Lösung der Aufgabe ist ein erfindungsgemäßes Ladekabel vorgesehen.

Zur Lösung der Aufgabe ist eine Ladestation in Verbindung mit dem Oberbegriff des Patentanspruchs 8 dadurch gekennzeichnet, dass eine Leseeinheit angeordnet ist zum Auslesen von Identifikationsinformationen eines Datenspeicherelements dem Steckelement des Ladekabels zugeordnet ist.

Der besondere Vorteil der Ladestation besteht darin, dass eine mit einer Leseeinheit ausgestattete Ladestation zur Interaktion mit einem das Datenspeicherelement aufweisenden Steckelement in der Lage ist. Eine derartige Ladestation kann beispielsweise ohne manuelles Zutun des Nutzers Identifikationsinformationen zum Nutzer selbst, zum Fahrzeugtyp bzw. zu dem zulässigen Betriebsparametern empfangen. Darüber hinaus kann auf das Vorsehen einer Vorrichtung zur manuellen Identifikation des Nutzers, beispielsweise auf ein Zahlenfeld zur Eingabe einer Nutzer-ID oder auf ein Kartenlesegerät verzichtet werden. Hierdurch erhöht sich der Schutz der Ladestation vor Vandalismus und Manipulation. Zudem wird die Handhabung der Ladestation besonders einfach, so dass der Ladevorgang insbesondere bei einem automatischen Lesen der Identifikationsinformationen auch von ungeübten Nutzern in einfacher Weise initiiert werden kann.

Nach einer bevorzugten Ausführungsform der Ladestation ist die Leseeinheit von außen sichtbar in dem Gehäuse angeordnet. Ebenso kann die Position der Leseeinheit im Gehäuse von außen durch eine Markierung gekennzeichnet sein. Vorteilhaft kann die Steckeinheit hierdurch direkt an die Leseeinheit angehalten bzw. in dessen unmittelbare Nähe gebracht werden, so dass eine Übertragung der Informationen von dem Datenspeicherelement an die Leseeinheit in besonders zuverlässiger Weise auch unter ungünstigen Randbedingungen möglich ist.

Nach einer Weiterbildung der Ladestation ist die Leseeinheit benachbart zu dem Gegensteckelement und/oder zu der Öffnung des Gehäuses und/oder zu einem Abdeckelement angeordnet. Vorteilhaft kann durch die Anordnung der Leseeinheit benachbart zu dem Gegensteckelement bzw. der Öffnung eine besonders einfache Handhabung beim Einsetzen des Steckelements in das Gegensteckelement realisiert werden. Benachbart ist eine Anordnung im Rahmen der vorliegenden Erfindung dann, wenn die Entfernung derart bemessen ist, dass ein Auslesen des Datenspeicherelements des unmittelbar vor dem Gegensteckelement angeordneten bzw. in dasselbe eingesetzten Steckelements des Ladekabels durch das Leseelement zuverlässig möglich ist. Durch die Anordnung des Leseelements unter einem Abdeckelement ergibt sich ein verbesserter Witterungsschutz. Beispielsweise kann die Leseeinheit seitlich neben dem Gegensteckelement und/oder neben einem demselben zugeordneten Verschlusselement und/oder oberhalb des Gegensteckelements und/oder oberhalb des demselben zugeordneten Verschlusselements im Schutz eines das Gehäuse nach oben abschließenden Abdeckelements angeordnet sein.

Nach einer Weiterbildung der Ladestation weist das Verschlusselement die Leseeinheit auf. Hierdurch vereinfacht sich die Handhabung für den Nutzer weiter, da mit dem Annähern des Steckelements an das Gegensteckelement zugleich eine Annäherung des Datenspeicherelements an die Leseeinheit der Ladestation erfolgt. Der Informationsaustausch kann für den Nutzer vollständig unbewusst während des Einsetzens des Steckelements in das Gegensteckelement erfolgen. Ein "Sperren" der Leseeinheit in der Bereitstellungsposition kann beispielsweise bewirkt werden, indem das Verschlusselement in der Bereitstellungsposition des Gegensteckelements unzugänglich in dem Gehäuse angeordnet ist. Vorteilhaft erhöht sich hierdurch der Schutz der Leseeinheit vor Vandalismus und Missbrauch.

Nach einer Weiterbildung der Ladestation ist als Teil der Ladestation eine Sendeeinheit angeordnet zum passiven Auslesen des Datenspeicherelements mittels eines von der Sendeeinheit ausgesandten Trägersignals. Vorteilhaft kann hierdurch die Steckeinheit vollständig passiv ausgebildet sein und ihrerseits auf eine aktive Sendeeinheit bzw. einen Energiespeicher verzichten. Die Sendeeinheit der Ladestation kann als eine separate Baueinheit bzw. integriert in die Leseeinheit realisiert sein. Durch das Vorsehen einer derartigen Sendeeinheit können beispielsweise in RFID-Technologie realisierte Datenspeicherelemente ausgelesen werden.

Zur Lösung der Aufgabe ist ein Verfahren zur Bereitstellung eines Stromanschlusses in einer Ladestation für elektrisch betreibbare Fahrzeuge in Verbindung mit dem Oberbegriff des Patentanspruchs 13 **dadurch gekennzeichnet, dass** zur Initialisierung der Bereitstellung des Gegensteckelements in der Bereitstellungsposition mittels eines dem Steckelement zugeordneten Datenspeicherelement gespeicherten Identifikationsinformationen von dem Datenspeicherelement an die Ladestation übertragen und von einer Leseeinheit der Ladestation ausgelesen und zur Freigabe des Gegensteckelements mit gespeicherten Vergleichsdaten verglichen werden.

Der besondere Vorteil des Verfahrens besteht darin, dass eine Einhandbedienung des Steckelements bzw. der Ladestation möglich ist. Der Nutzer kann so während der Bedienung der Ladestation beispielsweise eine Tasche tragen oder ein Kind festhalten. Darüber hinaus kann auf Basis der an die Ladestation übertragenen Identifikationsinformationen der Nutzer identifiziert und die Abrechnungsroutine gestartet werden. Ferner können kundenspezifische Vorgaben, beispielsweise Vorgaben zu der einzuspeisenden Energiemenge bzw. zum maximalen Budget in die Identifikationsinformationen integriert oder mit den bereitgehaltenen Vergleichsdaten abgespeichert sein. Durch die Bereitstellung des Gegensteckelements wird das das Datenspeicherelement aufweisende Steckelement an bzw. in die Nähe einer - beispielsweise für den Nutzer sichtbar angeordneten - Leseeinheit bzw. des noch unzugänglich in dem Gehäuse angeordneten Gegensteckelements gehalten. Daraufhin wird das in dem Gehäuse angeordnete Gegensteckelement bereitgestellt, beispielsweise durch die Freigabe einer Öffnung und/oder das Verbringen des Gegensteckelements in eine zugängliche Position. Sofern die Ladestation mehr als ein freies, das heißt zurzeit nicht verwendetes Gegensteckelement aufweist, wird mindestens ein freies Gegensteckelement bereitgestellt. Die Bereitstellung erfolgt hierbei nur, wenn der Vergleich der Identifikationsinformation mit den gespeicherten Vergleichsdaten erfolgreich verlaufen ist.

Um das Gegensteckelement in der Bereitstellungsposition bereitzustellen, kann beispielsweise ein das Gegensteckelement bei Nichtverwendung desselben verschließendes Verschlusselement entriegelt wird. Das entriegelte Verschlusselement kann beispielsweise als eine Klappe ausgebildet sein, die nach dem Entriegeln vom Nutzer manuell angehoben werden kann. Beispielsweise kann das Gegensteckelement in die Bereitstellungsposition verbracht werden, indem das Verschlusselement mittels einer Betätigungseinheit aufgeschwenkt wird, so dass das Gegensteckelement frei zugänglich in dem Gehäuse angeordnet ist und das Steckelement ohne weiteres in das Gegensteckelement eingesetzt werden kann. Beispielsweise kann das Gegensteckelement beweglich, insbesondere verschiebbar, in dem Gehäuse der Ladestation angeordnet sein und über Stellmittel, insbesondere einen elektromechanischen Antrieb, in die Bereitstellungsposition verbracht werden, in der das Gegensteckelement zugänglich in dem Gehäuse angeordnet ist. Das Verschlusselement ist in seiner Öffnungsposition angeordnet, wenn das Steckelement in das Gegensteckelement eingesetzt werden kann.

Nach einer bevorzugten Ausführungsform des Verfahrens wird vor dem Bereitstellen des Gegensteckelements und zusätzlich zu dem Abgleich der auf dem Datenspeicherelement und an die Leseeinheit übertragenen Identifikationsinformation mit den Vergleichsdaten eine persönliche Identifikationsnummer des Nutzers eingelesen und mit weiteren Vergleichsdaten abgeglichen. Vorteilhaft erhöht sich durch das Einlesen einer persönlichen Identifikationsnummer (PIN) die Sicherheit des Initialisierungsvorgangs, da ein mit dem eingesetzten Datenspeicherelement entwendetes Ladekabel allein zwar zur Identifikation des Nutzers, jedoch nicht für die Bereitstellung des Gegensteckelements bzw. zur Freigabe eines Ladevorgangs verwendet werden kann. Die persönliche Identifikationsnummer kann beispielsweise mittels eines in dem Auto bzw. an der Ladestation angeordneten Bedienelements (Ziffernfeld) eingegeben werden. Ebenso ist denkbar, die PIN über ein anderes elektronisches Gerät, beispielsweise ein Handy zu übertragen. Die PIN kann auf Wunsch des Nutzers nach der einmaligen Eingabe gespeichert werden, so dass eine wiederholte Eingabe der PIN nicht gefordert sein muss.

Nach einer Weiterbildung des Verfahrens wird von der Ladestation in festen bzw. variablen Zeitintervallen ein Trägersignal ausgesendet. Das Trägersignal wird durch ein in dem Sendebereich desselben befindliches Datenspeicherelement moduliert zur Codierung der Identifikationsinformation in das Trägersignal. Das modulierte Trägersignal wird von der Leseeinheit der Ladestation empfangen und ausgelesen. Vorteilhaft wird das Verfahren vollständig auf Seiten der Ladestation 2 implementiert, so dass ein passives Steckelement realisiert werden, welches auf eine Sendeeinheit und/oder einen Energiespeicher zum Betrieb der Sendeeinheit verzichtet. Das Datenspeicherelement kann in diesem Fall beispielsweise als ein RFID-Chip ausgebildet sein. Vorteilhaft kann das Ladekabel hierdurch besonders preisgünstig gestaltet sein. Darüber hinaus kann durch das wiederholte Aussenden des Trägersignals seitens der Ladestation sichergestellt werden, dass ein sich mit dem Steckelement in der Ladestation nähernder Nutzer frühzeitig erkannt wird. Auf Basis der ausgelesenen Identifikationsinformation kann das Gegensteckelement der Ladestation bereitgestellt werden, noch bevor der Nutzer mit dem Steckelement die Ladestation erreicht. Hierdurch wird die Bedienung der Ladestation weiter vereinfacht.

Nach einer Weiterbildung des Verfahrens wird die Identifikationsinformation des Datenspeicherelements nach der Bereitstellung des Gegensteckelements in festen und/oder variablen Zeitintervallen wiederholt an die Ladestation übertragen. Dies kann unabhängig davon erfolgen, ob das Steckelement in das Gegensteckelement eingesetzt ist oder nicht. Vorteilhaft kann auf diese Weise einer missbräuchlichen Nutzung der Ladestation vorgebeugt werden. Ferner kann eine Ladestation automatisch ausgeschaltet bzw. das Gegensteckelement in die Nichtverwendungsposition zurück verbracht werden, wenn sich der Nutzer mit dem Datenspeicherelement von der Ladestation entfernt und der Nutzer seinen Ladewunsch aufgegeben hat.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine Prinzipdarstellung eines Steckelements bei Annäherung desselben an eine in einer Nichtver- wendungsposition befindliche Ladestation,

- Figur 2: eine Frontansicht der Ladestation gemäß Figur 1 und
- Figur 3: eine vergrößerte Schnittdarstellung eines Ein- steckbereichs X des Steckelements gemäß Figur 1.

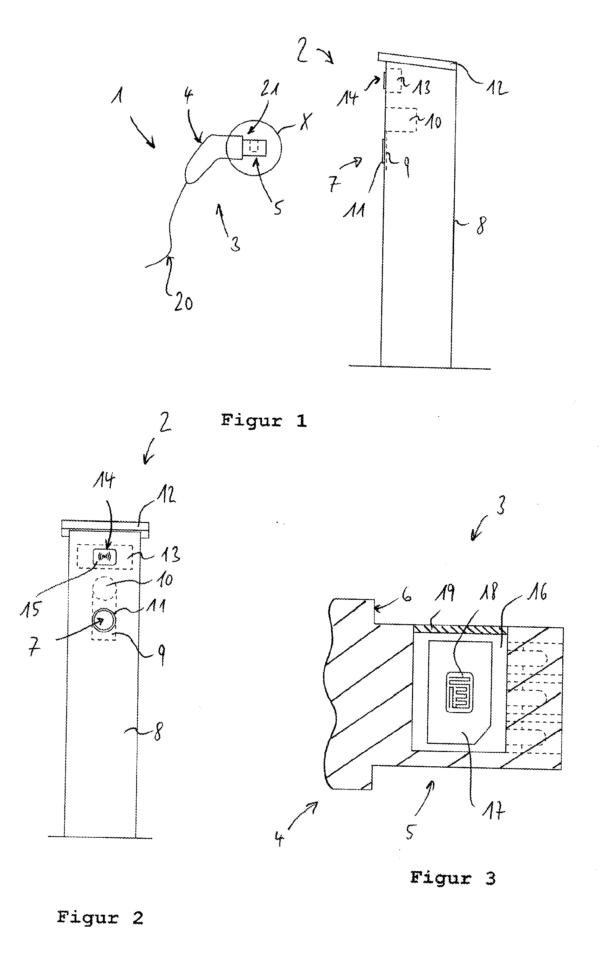

Ein Ladekabel 1 gemäß Figur 1 dient zum Anschluss eines elektrisch betreibbaren Fahrzeugs an eine Ladestation 2, mittels derer elektrische Energie zum Aufladen eines Energiespeichers des Fahrzeugs bereitgestellt wird. Das Ladekabel 1 dient somit zur Übertragung von elektrischer Energie (Ladestrom) von der Ladestation 2 zu dem Energiespeicher des Fahrzeugs. Die Ladestation 2 weist einen Stromanschluss im Niederspannungsbereich auf. Dieser Stromanschluss ist mit einem vorzugsweise im Erdreich oder in einem Bauwerk verlaufenden Stromkabel eines Energieversorgungsunternehmens verbunden, wobei das Stromkabel Teil eines Niederspannungsnetzes ist. In der Ladestation 2 ist zusätzlich ein nicht dargestellter Stromzähler integriert, mittels dessen der über das Ladekabel 1 in Energiespeicher des Fahrzeugs eingespeiste elektrische Stromfluss gemessen wird.

Als Fahrzeuge im Sinne dieser Erfindung gelten insbesondere Automobile, Zweiräder, Wasserfahrzeuge (Boote), Anhänger (z.B. Wohnanhänger, Verkaufsanhänger), Wohnmobile und Luftfahrzeuge.

Das Ladekabel 1 weist an einem der Ladestation 2 zugewandten Ende eines Leitungsbereichs 20 desselben ein Steckelement 3 auf. An einem dem nicht dargestellten Fahrzeug zugewandten zweiten Ende des Leitungsbereichs 20 des Ladekabels 1 kann gleichfalls ein zweites Steckelement vorgesehen sein zum Verbinden des Ladekabels 1 mit dem Fahrzeug. Ebenso kann das Ladekabel 1 - unter Verzicht auf das zweite Steckelement - fest mit dem Fahrzeug verbunden sein.

Das Steckelement 3 weist einen Haltebereich 4 zum Greifen des Steckelements 3 durch eine Bedienperson auf. Der Haltebereich 4 kann ergonomisch geformt sein und ist in dem Ausführungsbeispiel gemäß Figur 1 exemplarisch abgewinkelt dargestellt. An den Haltebereich 4 schließt sich endseitig, das heißt auf der dem Leitungsbereich 20 abgewandten Seite, ein Einsteckbereich 5 zum Einstecken des Steckelements 3 in die Ladestation 2 an. Der Einsteckbereich 5 ist durch eine Anlagefläche 6 von dem Haltebereich 4 getrennt. Der Einsteckbereich 5 weist hierbei eine geringere Querabmessung auf als der Haltebereich 4, so dass die Anlagefläche 6 im Bereich einer Stufe 21 zwischen dem Haltebereich 4 und dem Einsteckbereich 5 angeordnet ist.

Im Einsteckbereich 5 weist das Einsteckelement 3 eine Ausnehmung 16 auf zur Aufnahme eines als kontaktlose Chipkarte ausgebildeten Datenspeicherelementes 18, das lösbar in einer Festlegeeinheit 17 angeordnet ist. Die Festlegeeinheit 17 kann beispielsweise als ein Adapter ausgebildet sein, die die Dimension der Chipkarte an die Ausnehmung 16 des Einsteckelementes 3 anpasst. Die Festlegeeinheit 17 kann auch als eine fest oder entnehmbar oder lösbar mit der Chipkarte verbundenen Rahmen, Schublade oder Kassette ausgebildet sein.

Die kontaktlose Chipkarte 18 ist vorzugsweise als ein Transponder ausgebildet, der in einem RFID-System eingesetzt werden kann. Der Transponder weist einen RFID-Chip sowie eine Antenne (Antennenspule) auf, die auf einem vorzugsweise aus Kunststoffmaterial bestehenden Substrat angeordnet sind. Der Transponder ist üblicherweise plattenförmig ausgebildet.

Die Ausnehmung 16 des Einsteckelementes 3 ist über einen wiederverschließbaren Verschluss 19 - beispielsweise eine drehbar an dem Einsteckbereich 5 des Steckelements 3 gehaltene Klappe - derart verschließbar, dass die Chipkarte 17 mit dem Datenspeicherelement 18 vor Witterungseinflüssen und Berührung geschützt in der Ausnehmung 16 angeordnet ist. Die Chipkarte 17 ist hierbei mittels eines nicht dargestellten Rastelements verriegelt und kann bei geöffnetem Verschluss 19 in einfacher Weise aus der Ausnehmung 16 entnommen bzw. in diese eingesetzt werden.

In der dargestellten Nichtverwendungsposition der Ladestation 2 ist eine Öffnung 7 in einem Gehäuse 8 der Ladestation 2 durch ein Verschlusselement 9 verschlossen. Zudem ist ein Gegensteckelement 10, in welches in einer Bereitstellungsposition desselben das Steckelement 3 des Ladekabels 1 mit dem Einsteckbereich 5 eingesteckt werden kann, derart oberhalb der Öffnung 7 angeordnet, dass das Gegensteckelement 10 in dem Gehäuse 8 unzugänglich ist. Zur Verbringung des Gegensteckelements 10 aus einer Nichtbereitstellungsposition in die Bereitstellungsposition wird das Gegensteckelement 10 beispielsweise mittels eines nicht dargestellten Antriebs in dem Gehäuse 8 derart (in eine Öffnungsstellung) verschoben, dass das Gegensteckelement 10 hinter der Öffnung 7 fluchtend zu dieser angeordnet ist. Hierbei wird zugleich das Verschlusselement 9, welches fest mit dem Gegensteckelement 10 verbunden ist, derart verschoben, dass die Öffnung 7 freigegeben ist und das Steckelement 3 des Ladekabels 1 mit dem Einsteckbereich 5 durch die Öffnung 7 in das Gegensteckelement 10 eingesetzt werden kann. Hierbei ist der Einsteckbereich 5 des Steckelements 3 vollständig von dem Gegensteckelement 10 umgeben. Vorzugsweise befindet sich das Steckelement 3 mit dem Gegensteckelement 10 in einem Steckeingriff. Zu diesem Zweck kann das Steckelement 3 und/oder das Gegensteckelement 10 entsprechende Rastelemente aufweisen, die eine lösbare Rastverbindung ermöglichen. Die Anlagefläche 6 des Einsteckelements 3 liegt an einer als Anlage und Zentrier- bzw. Einsetzhilfe ausgebildeten Blende 11 der Ladestation 2 an, die konzentrisch zu der Öffnung 7 angeordnet ist.

In dem Gehäuse 8 ist oberhalb der Öffnung 7 und unterhalb eines das Gehäuse 8 nach oben abschließenden Abdeckelements 12 eine kombinierte Sende- und Leseeinheit 13 angeordnet. Der Sende- und Leseeinheit 13 ist auf einer Außenseite des Gehäuses 8 eine optisch und haptisch gekennzeichnete Markierung 14 zugeordnet zur Kennzeichnung der Lage der Sende- und Leseeinheit 13 in dem Gehäuse 8. Die Markierung 14 weist eine zumindest abschnittsweise eben ausgebildete Kontaktfläche 15 auf.

Die Sende- und Leseeinheit 13 ist als ein Lesegerät ausgebildet, das die Energieversorgung des Transponders 18 als auch den Datenaustausch zwischen dem Transponder 18 und einem Mikrokontroller (Datenverarbeitungseinheit) des Lesegerätes 13 unter Verwendung magnetischer oder elektromagnetischer Felder ermöglicht. Über die Antenne kann dem elektromagnetischen Feld des Lesegerätes 13 die zum Betrieb des Transponders 18 benötigte Energie entnommen sowie die Datenübertragung durchgeführt werden. Der Transponder 18 weist vorzugsweise eine elektronische Schaltung und je nach verwendetem Frequenzbereich eine Antennenspule (z.B. 13,56 MHz) oder eine elektromagnetische Antenne (z.B. 868 MHz) auf. Zu einer sogenannten Nahfeldkommunikation zwischen dem Transponder 18 und dem Lesegerät 13 sind dieselben über Spulen induktiv miteinander gekoppelt, wobei in einem aktiven Kommunikationsmodus der Transponder 18 und das Lesegerät 13 zwischen Sende- und Empfangsbetrieb hin und her wechseln.

Das Gegensteckelement 10 ist in einem solchen Abstand zu dem Lesegerät 13 angeordnet, dass der passiv betriebene Transponder 18 dem elektromagnetischen Feld des Lesegerätes 13 ausreichend Energie zum Eigenbetrieb seiner Schaltung entnehmen kann. Der Abstand zwischen dem Lesegerät 13 und dem Gegensteckelement 10 kann bei einem RFID-System gemäß ISO15693 kleiner als 1 m und gemäß ISO14443 klener als 10 cm betragen.

Nach einer nicht dargestellten alternativen Ausführungsform kann der Transponder auch als aktiver Transponder mit einer eigenen Energieversorgung ausgebildet sein. Hierzu kann er beispielsweise eine Batterie aufweisen, die die elektronische Schaltung mit Strom versorgt. Dieser Transponder kann beispielsweise lösbar oder nichtlösbar verbunden mit dem Ladekabel 1 bzw. mit dem Haltebereich 4 verbunden sein.

Nach einer alternativen Ausführungsform kann die Chipkarte auch als eine kontaktbehaftete Chipkarte mit Kontaktflächen zur Kontaktierung mit korrespondierenden Kontakten eines in der Ladestation integrierten Lesegerätes ausgebildet sein. In diesem Fall ist das Lesegerät bzw. die entsprechenden Kontakte des Lesegerätes unmittelbar am Gegensteckelement 10 angeordnet.

Die in der Sende- und Leseeinheit 13 empfangenen Daten werden in einer nicht dargestellten Datenverarbeitungseinheit, die vorzugsweise innerhalb der Ladestation 2 bzw. innerhalb der Sende- und Leseeinheit 13 integriert ist, verarbeitet. Hierzu weist die Datenverarbeitungseinrichtung einen Mikroprozessor sowie ein in einem Speicher abgelegtes Spezialisierungs- bzw. Vergleichsprogramm auf, in dem Identifikationsinformationen verarbeitet werden.

Von der Sende- und Leseeinheit 13 werden in regelmäßigen Zeitintervallen Trägersignale ausgesendet. Sofern infolge der Annäherung des Nutzers an die Ladestation 2 das Datenspeicherelement 18 in den Sendebereich der Sende- und Leseeinheit 13 gelangt, wird das Trägersignal durch das Datenspeicherelement 18 moduliert. Die Sende- und Leseeinheit 13 empfängt dann ein moduliertes Trägersignal, aus dem auf den Ladewunsch eines Nutzers und den hieraus resultierenden Wunsch nach Bereitstellung des Gegensteckelements 10 geschlossen werden kann. Zudem werden in dem modulierten Trägersignal von dem Datenspeicherelement 18 gespeicherte Identifikationsinformationen an die Ladestation 2 übermittelt. Die Identifikationsinformationen dienen zur Identifikation des Nutzers. Auf Basis der von der Leseeinheit 13 empfangenen Identifikationsinformationen wird dann durch einen Abgleich mit gespeicherten Vergleichsdaten die Identität des Nutzers festgestellt und/oder die Berechtigung des Nutzers geprüft. Sofern der Nutzer zur Benutzung der Ladestation 2 berechtigt ist, wird die Öffnung 7 freigegeben und das Gegensteckelement 10 in die Bereitstellungsposition verbracht. Der Nutzer kann das Steckelement 3 sodann in das Gegensteckelement 10 einstecken.

Nach dem Einstecken des Steckelements 3 in das Gegensteckelement 10 wird das Steckelement 3 mittels einer nicht dargestellten Verriegelungseinheit der Ladestation 2 in dem Gegensteckelement 10 verriegelt. Durch die Verriegelung ist eine Entnahme des Steckelements 3 aus dem Gegensteckelement 10 nicht möglich. Hierdurch wird zum einen sichergestellt, dass das Ladekabel 1 während des Ladevorgangs, welcher aufgrund der hierfür erforderlichen Zeitdauer zumindest zeitweise unbeaufsichtigt erfolgen kann, nicht entwendet werden kann. Zum anderen wird sichergestellt, dass der wiederverschließbare Verschluss 19 unzugänglich in dem Gegensteckelement 10 angeordnet ist und das Datenspeicherelement 18 somit nicht aus dem Steckelement 3 entnommen werden kann. Hierdurch ist einer Entwendung des Gegensteckelements 10 und/oder des Datenspeicherelements 18 zuverlässig vorgebeugt.

Die Verriegelung des Steckelements 3 in dem Gegensteckelement 10 wird in der Regel nach Empfang eines zusätzlichen Verriegelungssignals erfolgen. Ein derartiges Verriegelungssignal kann beispielsweise an die Ladestation 2 gesandt werden, wenn das Ladekabel 1 den Energiespeicher des Fahrzeugs mechanisch und/oder elektrisch mit der Ladestation 2 verbindet. Ebenso kann das Steckelement 3 beispielsweise auf ein manuell von dem Nutzer oder fahrzeugseitig automatisch erzeugtes Verriegelungssignal hin in dem Gegensteckelement 10 verriegelt werden. Erst nach der Verriegelung des Steckelements 3 in dem Gegensteckelement 10 wird mit dem Laden des Energiespeichers begonnen. Optional kann als zusätzliche Sicherheitsfunktion die Eingabe einer persönlichen Identifikationsnummer (PIN) erforderlich sein. Die persönliche Identifikationsnummer kann über in dem Fahrzeug angeordnete Eingabemittel via Funk und/oder über das Ladekabel 1 an die Ladestation 2 übertragen werden. Ebenso ist es möglich, die persönliche Identifikationsnummer mittels eines mobilen Eingabegeräts, beispielsweise eines Mobiltelefons oder eines Notebooks mit Internetanschluss zu übertragen. Die Übertragung kann beispielsweise an die Ladestation 2 erfolgen. Ebenso ist es möglich, die persönliche Identifikationsnummer an eine Servicezentrale eines Ladestationenbetreibers zu senden, die ihrerseits datentechnisch mit der Ladestation 2 gekoppelt ist.

Die persönliche Identifikationsnummer wird vor der Freigabe der Ladestation 2 mit weiteren Vergleichsdaten verglichen. Nur wenn der Identifikationsabgleich erfolgreich und die persönliche Identifikationsnummer richtig sind, ist ein Laden des Energiespeichers des Fahrzeugs möglich. Hierdurch wird erreicht, dass Unberechtigte nicht in einfacher Weise missbräuchlich Gebrauch von dem Datenspeicherelement 18 machen.

Beispielsweise kann vorgesehen sein, dass die persönliche Identifikationsnummer nicht jedes Mal neu eingegeben werden muss, sondern in dem Fahrzeug gespeichert wird und bei der Anbindung des Fahrzeugs an die Ladestation 2 automatisch an dieselbe gesendet wird. In diesem Fall wird die persönliche Identifikationsnummer nach dem Bereitstellen des Gegensteckelements 10 und vor dem Beginn des Ladevorgangs übermittelt. Die Übermittlung einer korrekten persönlichen Identifikationsnummer kann beispielsweise zugleich das Verriegelungssignal auslösen und/oder via Funk oder über das Ladekabel 1 erfolgen.

Während des Ladevorgangs kann die Sende- und Leseeinheit 13 weiterhin Trägersignale aussenden und modulierte Trägersignale lesen. Hierdurch wird verifiziert, dass sich das Datenspeicherelement 18 unverändert im Empfangsbereich der Sende- und Leseeinheit 13 befindet. Hierdurch wird ein zusätzlicher Schutz gegen Missbrauch realisiert. Zudem kann das Gegensteckelement 10 aus der Bereitstellungsposition zurück in die Nichtverwendungsposition verbracht werden, wenn von der Sende- und Leseeinheit 13 kein moduliertes Trägersignal mehr empfangen wird. Das Fehlen des modulierten Trägersignals wird dahingehend interpretiert, dass sich das Datenspeicherelement 18 aus dem Sendebereich der Ladestation 2 entfernt hat und der Ladewunsch aufgegeben worden ist.

Der erfindungsgemäße Initialisierungsablauf sieht vor, dass der Zugang des Steckelementes 3 zu dem Gegensteckelement 10 der Ladesäule nur erfolgen kann, wenn eine Bedienperson des Ladekabels als für den Stromabgriff berechtigt ermittelt worden ist. Hierzu werden auf dem Transponder 18 gespeicherte Identifizierungsinformationen über eine kontaktlose oder kontaktbehaftete Schnittstelle an die Leseeinheit 13 übertragen und dann vorzugsweise in der Datenverarbeitungseinheit mit gespeicherten Vergleichsdaten der Ladestation 2 verglichen. Bei Übereinstimmung des Vergleichs wird ein Freigabesignal erzeugt, mittels dessen das Verschlusselement 9 in die Öffnungsstellung verbracht wird zur Freigabe des Gegensteckelementes 10. Das Steckelement 3 kann somit in Steckeingriff mit dem Gegensteckelement 10 verbracht werden. Bei Nichtübereinstimmung des Vergleichs wird ein Sperrsignal erzeugt, mittels dessen das Verschlusselement 9 in der Schließstellung verbleibt. Ein Zugang des Steckelementes 3 zu dem Gegensteckelement 10 ist somit verhindert.

Sofern ein Empfang eines modulierten Trägersignals und die Bereitstellung des Gegensteckelements 10 bei Annäherung des Steckelements 3 an die Ladestation 2 beispielsweise aufgrund ungünstiger Witterungsverhältnisse (dichter Schneefall) fehlschlägt, kann das Steckelement 3 mit dem Einsteckbereich 5 unmittelbar an die Kontaktfläche 15 der Markierung 14 angehalten werden. Der Abstand der Sendeund Leseeinheit 13 zu der Kontaktfläche 15 ist so bemessen, dass ein sicherer Empfang des modulierten Trägersignals auch unter ungünstigen Umständen gewährleistet ist. Hinzu kommt, dass die Markierung 14 witterungsgeschützt unter dem Abdeckelement 12 angeordnet ist.

Die Ladestation 2 ist im vorliegenden Beispiel als eine Ladesäule ausgebildet. Selbstverständlich kann die Ladestation 2 eine andere als die dargestellte Geometrie aufweisen, beispielsweise als eine wandhängende Ladestation ausgebildet sein. Ebenso ist es möglich, dass die Ladestation 2 verteilt angeordnete Baugruppen aufweist, insbesondere eine Zentraleinheit mit einer Zentralsteuerung sowie verteilt angeordnete Anschlusseinheiten, in denen jeweils ein Gegensteckelement 10 angeordnet ist.

Gleiche Bauteile und Bauteilfunktionen sind mit den gleichen Bezugsziffern versehen.

Nach einer alternativen Ausführungsform der Erfindung kann die Ladestation 2 mehr als ein Gegensteckelement 10 aufweisen. Beispielsweise können zwei Gegensteckelemente 10 in einer Ladestation 2 angeordnet sein. Hierbei kann eine gemeinsame Sende- und Leseeinheit 13 angeordnet sein, wobei beim Empfang eines modulierten Trägersignals alle freien Gegensteckelemente 10 in die Bereitstellungsposition verbracht werden und nach der Auswahl eines Gegensteckelements 10 alle nicht verwendeten Gegensteckelemente 10 in die Nichtverwendungsstellung zurückverbracht werden. Ebenso ist es möglich, jedem Gegensteckelement 10 eine separate Sende- und Leseeinheit 13 zuzuordnen, so dass beim Empfang eines modulierten Trägersignals durch eine der Sende- und Leseeinheiten 13 das dieser Sende- und Leseeinheit 13 zugeordnete Gegensteckelement 10 in die Bereitstellungsposition verbracht wird.

Nach einer alternativen Ausführungsform der Erfindung kann die Markierung 14 beispielsweise seitlich benachbart zu der Öffnung 7 angeordnet sein. Oberhalb der Markierung 14 kann ein separates Abdeckelement angeordnet sein, welches nicht zugleich zum Abschluss des Gehäuses 8 dient. Ebenso kann auf das Vorsehen eines Abdeckelements für die Markierung 14 bzw. die Sende- und Leseeinheit 13 vollständig verzichtet werden. Das Gehäuse 8 kann gleichwohl geschlossen ausgebildet sein.

Das Datenspeicherelement 18 kann beispielsweise von einem Stromanbieter ausgegeben oder - ähnlich wie eine Prepaid-Karte - mit einem vordefinierten Guthaben verkauft werden. Das vordefinierte Guthaben wird hierbei mindestens beim ersten Ladevorgang mit den Identifikationsinformationen an die Ladestation 2 übertragen. Mit dem Austausch des Datenspeicherelements kann zugleich der Anbieter bzw. Vertragspartner, über den die elektrische Energie bereitgestellt wird, getauscht werden. Beispielsweise ist es möglich, dass durch das Einsetzen eines speziellen Datenspeicherelements 18 in das Steckelement 3 Energie von einem Energielieferanten bezogen wird, der nicht zugleich Aufsteller bzw. Betreiber der Ladestation 2 ist. Ferner kann das Datenspeicherelement 18 von dem Ladestationenbetreiber an dessen registrierte Kunden ausgegeben werden.

Nach einer alternativen Ausführungsform der Erfindung kann unmittelbar nach Empfang der Identifikationsinformationen durch die Leseeinheit in einem ersten Abgleich ermittelt werden, ob der Nutzer einem zugangsberechtigtem Personenkreis angehört. Bei einem erfolgreichen Abgleich wird in einem ersten Schritt das Gegensteckelement 10 in die Bereitstellungsposition verbracht. Nach dem ersten Abgleich wird in einem zweiten Abgleich geprüft, ob der Nutzer über die Zugehörigkeit zum berechtigten Personenkreis hinaus im konkreten Einzelfall zur Nutzung der Ladestation berechtigt ist. Sofern dies der Fall ist, kann nach dem Einsetzen des Steckelements 3 in das Gegensteckelement 10 ein Freigabesignal erzeugt werden, auf Basis dessen das Steckelement 3 in dem Gegensteckelement 10 verriegelt und/oder mit der Einspeisung von elektrischer Energie in den fahrzeugseitigen Energiespeicher begonnen wird. Vorteilhaft wird der Identifikationsalgorithmus hierdurch zweigeteilt ausgeführt, wobei der erste Datenabgleich besonders schnell erfolgen kann und der zweite Datenabgleich, der gegebenenfalls den Zugriff auf eine in der Ladestation oder entfernt hierzu angeordnete Datenbank erfordert, der Bereitstellung der Steckdose überlagert wird.

Nach einer alternativen Ausführungsform der Erfindung kann der RFID-Chip 18 bereits während der Fertigung des Steckelements 3 in dasselbe eingebracht werden und mechanisch unzugänglich in dem Steckelement 3 angeordnet sein. Der RFID-Chip 18 kann direkt umspritzt werden bzw. von einer Hülle umgeben sein, die den RFID-Chip 18 kapselt und vor Hitze und/oder mechanischer Belastung schützt. Der RFID-Chip 18 bzw. der Datenträger ist somit fest und unlösbar mit dem Steckelement 3 verbunden, das heißt bildet zusammen mit dem Steckelement 3 eine gemeinsame Baueinheit. Als mechanische Belastung kommen hierbei Drücke oder dergleichen in Frage, die während der Fertigung des Steckelements 3 auftreten. Ebenso kann der RFID-Chip 18 durch die Umhüllung vor mechanischen Stößen geschützt werden, die beim Gebrauch des Ladekabels 1 auf den RFID-Chip 18 einwirken.

Nach einer alternativen Ausführungsform der Erfindung kann statt des RFID-Chips 18 ein berührungslos mittels kapazitiven Elementen auslesbarer Chip 18 in dem Steckelement 3 angeordnet sein.

Es kann auf beiden Seiten des Ladekabels 1 ein gleiches Einsteckelement 3 mit jeweils einem Datenspeicherelement 18 angeordnet sein. In diesem Fall muss der Nutzer nicht unterscheiden, welches Steckelement 3 des Ladekabels 1 in das Fahrzeug und welches Steckelement 3 des Ladekabels 1 in die Ladestation 2 einzusetzen ist.

## Patentansprüche

1. Steckelement (3) für ein Ladekabel (1), mittels dessen elektrische Energie von einer Ladestation (2) zu einem elektrisch betreibbaren Fahrzeug übertragbar ist, wobei das Steckelement (3) mechanisch und/oder elektrisch mit einem Gegensteckelement (10) der Ladestation (2) verbindbar ist, **dadurch gekennzeichnet, dass** dem Steckelement (3) ein Datenspeicherelement (18) zur Speicherung von Identifikationsinformationen zugeordnet ist, wobei die Identifikationsinformationen aus dem Datenspeicherelement (18) auslesbar und von dem Steckelement (3) an die Ladestation (2) übertragbar sind.

2. Steckelement (3) nach Anspruch 1, **dadurch gekennzeichnet, dass** das Datenspeicherelement (18) austauschbar in einer Ausnehmung (16) des Steckelements (3) angeordnet ist.

3. Steckelement (3) nach Anspruch 1 oder 2, **dadurch gekennzeichnet, dass** das Datenspeicherelement (18) als eine Chipkarte ausgebildet ist, wobei die Identifikationsinformationen berührungslos und/oder kontaktbehaftet an die Ladestation übertragbar sind, und/oder dass das Datenspeicherelement (18) als eine kontaktlose Chipkarte mit einem RFID-Chip ausgebildet ist zum passiven Auslesen der Identifikationsinformation mittels eines von der Ladestation (2) ausgesandten Trägersignals.

4. Steckelement (3) nach einem der Ansprüche 1 bis 3, **dadurch gekennzeichnet, dass** dem Datenspeicherelement (18) eine Festlegeeinheit (17) zugeordnet ist, wobei die Festlegeeinheit (17) in das Steckelement (3) einsetzbar und aus diesem entnehmbar ist oder wobei die Festlegeeinheit (17) abnehmbar an dem Steckelement (3) gehalten ist.

5. Steckelement (3) nach einem der Ansprüche 1 bis 4, **dadurch gekennzeichnet, dass** das Datenspeicherelement (18) und/oder das Steckelement (3) und/oder die Festlegeeinheit (17) derart geformt und/oder angeordnet sind,
- dass das Datenspeicherelement (18) witterungsgeschützt in dem Steckelement (3) und/oder in der Festlegeeinheit (17) angeordnet ist, und/oder
- dass das Datenspeicherelement (18) in einer Steckposition des Steckelements (3), in der das Steckelement (3) des Ladekabels (1) in das Gegensteckelement (10) der Ladestation (2) eingesetzt ist, nicht aus dem Steckelement (3) entnehmbar und/oder für den Nutzer unzugänglich in demselben angeordnet ist.

6. Steckelement (3) nach einem der Ansprüche 1 bis 5, **dadurch gekennzeichnet, dass** das Datenspeicherelement (18) von außen unzugänglich in dem Steckelement (3) angeordnet ist und/oder unlösbar mit dem Steckelement (3) verbunden ist.

7. Ladekabel (1) mit einem Steckelement (3) nach einem der Ansprüche 1 bis 6.

8. Ladestation (2) zur Bereitstellung von elektrischer Energie für elektrisch betreibbare Fahrzeuge mit einem Gehäuse (8) enthaltend wenigstens ein Gegensteckelement (10) zur mechanischen und/oder elektrischen Verbindung mit einem Steckelement (3) eines das Fahrzeug mit der Ladestation (2) verbindenden Ladekabels (1) nach einem der Ansprüche 1 bis 6, **dadurch gekennzeichnet, dass** eine Leseeinheit (Sende- und Leseeinheit 13) angeordnet ist zum Auslesen von Identifikationsinformationen eines Datenspeicherelements (18), wobei das Datenspeicherelement (18) dem Steckelement (3) des Ladekabels (1) zugeordnet ist.

9. Ladestation (2) nach Anspruch 8 **dadurch gekennzeichnet, dass** die Leseeinheit (Sende- und Leseeinheit 13) von außen sichtbar in dem Gehäuse (8) angeordnet ist und/oder das eine Position der Leseeinheit (Sende- und Leseeinheit 13) in dem Gehäuse (8) von außen durch eine Markierung (14) **gekennzeichnet** ist.

10. Ladestation (2) nach Anspruch 8 oder 9, **dadurch gekennzeichnet, dass** eine Öffnung (7) des Gehäuses (8) bei Nichtverwendung des Gegensteckelements (10) durch ein dem Gegensteckelement (10) zugeordnetes Verschlusselement (9) verschlossen ist und wobei das Gegensteckelement (10) in einer Bereitstellungsposition desselben durch die Öffnung (7) zugänglich angeordnet ist

11. Ladestation (2) nach einem der Ansprüche 8 bis 10, **dadurch gekennzeichnet,**
- **dass** die Leseeinheit (Sende- und Leseeinheit 13) benachbart zu dem Gegensteckelement (10) und/oder zu der Öffnung (7) und/oder zu einem Abdeckelement (12) angeordnet ist und/oder
- **dass** die Leseeinheit (Sende- und Leseeinheit 13) dem Verschlusselement (9) zugeordnet ist.

12. Ladestation (2) nach einem der Ansprüche 8 bis 11, **dadurch gekennzeichnet, dass** eine Sendeeinheit (Sendeund Leseeinheit 13) angeordnet ist zum passiven Auslesen des Datenspeicherelements (18) mittels eines von der Sendeeinheit (Sende- und Leseeinheit 13) ausgesendeten Trägersignals.

13. Verfahren zur Bereitstellung eines Stromanschlusses in einer Ladestation (2) für elektrisch betreibbare Fahrzeuge, wobei die Ladestation (2) ein Gegensteckelement (10) zur Aufnahme eines Steckelements (2) eines die Ladestation (2) mit dem Fahrzeug verbindenden Ladekabels (1) aufweist, wobei zur Bereitstellung des Gegensteckelements (10) der Ladestation (2) in einer Bereitstellungsposition ein Verschlusselement (9), welches bei Nichtverwendung des Gegensteckelements (10) den Zugang zu demselben versperrt, in eine Öffnungsstellung verbracht wird zur Freigabe des Gegensteckelements (10), und wobei das Steckelement (3) in der Bereitstellungsposition mit dem Gegensteckelement (10) mechanisch und/oder elektrisch verbunden wird, **dadurch gekennzeichnet, dass** zur Initialisierung der Bereitstellung des Gegensteckelements (10) in der Bereitstellungsposition desselben in einem dem Steckelement (3) zugeordneten Datenspeicherelement (18) gespeicherte Identifikationsinformationen von dem Datenspeicherelement (18) an eine Leseeinheit (Sende- und Leseeinheit 13) der Ladestation (2) übertragen werden und dann mit gespeicherten Vergleichsdaten verglichen werden, so dass bei übereinstimmendem Vergleich ein Freigabesignal erzeugt wird, mittels dessen das Verschlusselement (9) in die Öffnungsstellung verbracht wird zur Freigabe des Gegensteckelementes (10), und/oder bei nichtübereinstimmendem Vergleich ein Sperrsignal erzeugt wird, mittels dessen das Verschlusselement (9) in der Schließstellung verbleibt.

14. Verfahren nach Anspruch 13 **dadurch gekennzeichnet, dass** vor dem Bereitstellen des Gegensteckelements (10) und zusätzlich zu dem Abgleich der in dem Datenspeicherelement (18) gespeicherten Identifikationsinformationen mit den Vergleichsdaten eine persönliche Identifikationsnummer eines Nutzers eingelesen und mit weiteren Vergleichsdaten abgeglichen wird.

15. Verfahren nach Anspruch 13 oder 14, **dadurch gekennzeichnet,**
- **dass** von der Ladestation (2) in festen und/oder variablen Zeitschritten ein Trägersignal ausgesandt wird, dass das Trägersignal durch das in dem Sendebereich des Trägersignals befindliche Datenspeicherelement (18) moduliert wird zur Codierung der Identifikationsinformationen in das Trägersignal, dass das modulierte Trägersignal von der Leseeinheit (Sende- und Leseeinheit (13) der Ladestation (2) empfangen wird und dass die Identifikationsinformationen aus dem modulierten Trägersignal ausgelesen werden, und/oder
- **dass** die auf den Datenspeicherelement (18) gespeicherten Identifikationsinformationen nach der Bereitstellung des Gegensteckelements (10) in festen und/oder variablen Zeitschritten wiederholt an die Ladestation (2) übertragen werden und dann dort weiterverarbeitet werden zur Realisierung von Komfort- und/oder Sicherheitsfunktionen.
